# EUROPEAN PATENT APPLICATION

(11) **EP 4 764 605 A2**
(43) Date of publication of application: **24.06.2026**
(21) Application number: 26177535.7
(22) Date of filing: 28.02.2024
(51) Int. Cl.: G01S 13/58

(54) **METHOD FOR EXTRACTING DATA SETS FROM RADAR VIDEO DATA**

(30) Priority: 28.02.2023 EP 23159096
(62) Divisional of application: 24708203.5
(71) Applicant: Terma A/S, 8520 Lystrup (DK)
(72) Inventor: HØRLÜCK, Sune, 8520 Lystrup (DK)
(74) Representative: Zacco Denmark A/S

(57) **Abstract**

A method for extracting radar video (1) data suitable for identification of vessels and/or aircrafts is disclosed, which method comprises the steps of acquiring and repeatedly updating a radar video (1), acquiring and repeatedly updating one or more sets of track data, for each update of an acquired set of track data designating a blob (5, 7, 9) in a radar video (1) image representing to the vessel or aircraft being tracked, defining a cut-out section (6, 8, 10) of the radar video (1) image comprising the blob (5, 7, 9), and creating a radar video cut-out corresponding to the defined cut-out section (6, 8, 10); and creating and storing a data set for each set of track data, which data set comprises a series of updates of the set of track data and the corresponding radar video (1) cut-outs. Furthermore, the use of a data set extracted using such method for automatic vessel or aircraft type identification and for training an automatic vessel or aircraft type identification system is disclosed.

## Description

The present disclosure relates to a method at a radar installation with a radar antenna and a radar installation. In particular the present disclose relates to data reduction and to extracting data from radar video images.

### INTRODUCTION

When monitoring areas of sea using radar installations, it is well known to analyse the collected data for obtaining track data, i.e. information about the movements of individual vessels and/or aircrafts within the monitored area. For many reasons, some of which relate to security, it is often not enough to know how such vessels and aircrafts move. It is also important to know who or what it is that is present and moves through or around within the monitored area.

For the large majority of vessels and aircrafts this is no problem because they identify themselves, for instance by means of Automatic Identification System (AIS) (vessels) and Automatic Dependent Surveillance-Broadcast (ADS-B) (aircrafts), which are transmitted continuously or at least at regular intervals. In the relatively rare cases, in which a vessel or aircraft is not transmitting such identification data, it is likely that there is reason to suspect that something illegal is taking place and/or the security may be at risk, and it is even more relevant to find out, which or at least what type of vessel or aircraft is on the move. In other cases, there may be a suspicion that a vessel or aircraft is transmitting false identification data in order to hide its actual identity, and it may be relevant to be able to validate its alleged identity.

Thus, a number of systems have been developed for identifying the type (and, if possible, even the identity) of vessels and aircrafts, which have been tracked by such monitoring radar installations. It has been realised that data relating to the apparent Radar-Cross-Section, i.e. the "silhouette" of the vessel or aircraft as seen by the radar installation, is not sufficient for recognising the type of a given vessel or aircraft being tracked by the radar installation.

Therefore, there is an increasing focus on using more complicated systems, typically Artificial Intelligence-based systems, for being able to identify the type of tracked vessels or aircrafts from track data and corresponding radar video recordings. Such systems are trained by feeding them with data relating to vessels and aircrafts, the identity and type of which is already known from AIS or ADS-B data or the like.

Such systems must, at least in principle, be trained with data relating to all possible types of vessels and aircrafts. If it is only desired to train the systems to identify certain types of vessels or aircrafts, the training data can easily be filtered using the AIS or ADS-B data or similar types of identification data. Furthermore, a large number, typically hundreds or even thousands, of examples of each vessel and aircraft type must be fed to the system, if reliable and reproducible results are to be obtained. Thus, it is not unusual that data corresponding to several months of traffic is needed for training such systems appropriately.

Radar video recordings being very data heavy, this means that enormous amounts of data are needed for obtaining an adequate level of training of such vehicle type identification systems, which is a limiting factor for obtaining useful vessel and aircraft type identification system in practice. This is an increasing problem, because there is a tendency towards increasing the resolution of the acquired radar video (and thereby also the amount of data) in order to be able to identify smaller vessels and aircrafts and/or to identify the type or identity of vessels and aircrafts at larger distance than it is possible today.

### SUMMARY

There is provided:
A method at a radar installation with a radar antenna, comprising:
   acquiring first radar video including first radar images, each including radar image pixels, generated at the radar installation based on radio wave reflections received by the radar antenna;
   determining, based on the first radar images, one or more sets of track data; wherein each set of track data includes at least one coordinate and at least one timestamp associated with a track of a moving object observed based on processing the first radar images;
   generating a second radar video, including one or more second radar images, including for each set of track data:
      i. designating a contiguous blob including non-empty radar image pixels from the first radar video images at and about the at least one coordinate in the set of track data;
      ii. based on the contiguous blob, determining a cut-out section; wherein the cut-out section includes the contiguous blob and radar image pixels surrounding the contiguous blob; and
      iii. generating a second radar image based on the cut-out section;
   associating the one or more sets of track data with corresponding cut-out sections;
   sending at least the second radar video, including the second radar images, and the one or more sets of track data including information associating the one or more sets of track data with corresponding cut-out sections to a data processing station;
wherein the first radar images and the second radar images each include radar image pixels including magnitude information and phase information based on the radio wave reflections received by the radar antenna.

An advantage is a data reduction obtained by determining the cut-out sections dynamically while keeping detailed radar reflection information obtained from the radar wave reflections. The detailed radar reflection information can be processed at the data processing station e.g. at a data processing station remote from the radar installation. Processing of the detailed radar reflection information may include e.g. training of a machine learning system to obtain a trained model, inference-determination based on the detailed radar reflection information and the trained model, and storage of the detailed radar reflection information e.g. for documentation of observed object's movement.

By sending the second radar video images, rather than the full, first radar video images, the need for data transmission capacity of a communication line or network connecting the radar installation and the data processing station is significantly reduced. In some examples, the communication line or network includes one or more physical connections and/or one or more wireless connections. In some examples sending the second radar video includes transmitting e.g. via a terrestrial data network e.g. an optical cable network and/or via a wireless data network e.g. including a cellular data network e.g. including 4G or 5G radio technology.

Experiments have shown that, whereas full radar video data typically amounts to in the order of 1 TB per day, the data sets resulting from the present method may amount to in the order of 1 GB of data per day. Thus, a reduction in the order of a factor 1,000 in the amount of data to be stored and possibly transmitted may be obtained by using the present invention.

It should be noted that, if the full radar video data is stored, it is often compressed by a factor of 3-5. However, this means that the data must be unpacked to be available for analysis, which is also time consuming.

By the expression "radar video image" is to be understood an image of the radar video, which is "frozen" at a given point in time. In some examples, the radar installation is a marine radar installation. The radar antenna may be a rotating radar antenna. The marine radar installation may be located at or in vicinity of a coast. In some examples, the radar installation is an airspace radar installation. In some examples, the radar installation is near-critical-infrastructure.

Generally, the radar antenna is configured to transmit and receive at radio frequencies.

In some examples the processing station performs automatic vessel and/or aircraft type identification using an automatic vessel or aircraft type identification system, such as an Artificial Intelligence-based vessel or aircraft type identification system, or for training such an automatic vessel or aircraft type identification system.

In some examples a moving object is an object from the group of: a vessel, such as a ship, e.g. a motor ship or a sail ship; an aircraft, e.g. an airplane; a helicopter; a drone; and a vehicle. The vessel, aircraft and vehicle may be manned on unmanned.

It is noted that a 'normal radar (video) image' is based on magnitude information obtained by processing the radio wave reflections received by the radar antenna. The magnitude information may be represented by one or more scalar values. A 'normal radar (video) image' typically contains information for determining range e.g. including distance to the observed moving object from the radar antenna.

Herein, magnitude and intensity is used interchangeably to designate the length, strength or power of a complex-valued number or of a vector.

It is noted that an example of a phase-information image is a 'moving target indicator video image' (MTI video image) which is based on phase information and optionally magnitude information obtained by processing the radio wave reflections received by the radar antenna. The phase information and optionally magnitude information may be represented by one or more a complex-valued numbers. A moving target indicator (MTI) radar image uses the Doppler frequency shift, phase-information, e.g. to discriminate moving targets from stationary elements/objects.

In some aspects, the radar image pixels surrounding the contiguous blob are included in, a boundary portion surrounding the contiguous blob. In some examples, the boundary portion has a fixed width, e.g. 1, 2, 3, 4, 5 or another number of pixels e.g. 10 pixels. In some examples, the boundary portion has a width associated with the size of the contiguous blob.

The radar video images may or may not be arranged e.g. optimized for displaying in a polar coordinate grid.

In some aspects, each cut-out section is configured with a size that is dynamically determined based on the contiguous blob.

An advantage is dynamic data reduction which enables data reduction while ensuring that detailed information is conveyed from the first radar video images to be available in the second radar video images.

Dynamically adjusting the dimensions of the defined cut-out sections depending on the number of pixels occupied by the actual blobs enables for optimising the size of each cut-out section, thus minimising the total amount of data to be stored and possible sent for a set of track data.

In some aspects, the first radar video images include images of a uniform size; and wherein the second radar video images include images of a non-uniform size.

An advantage is that data reduction dispenses with information that has no or only low information value for deriving information about the observed moving object.

In some aspects, the cut-out section is "rectangular" in the sense that it comprises a fixed number of pixels in the radial direction and a fixed number of pixels in the tangential direction of the radar video.

In some aspects, for each set of track data, dimensions of the cut-out section are adapted so that the corresponding designated blob is surrounded by less than 10 lines of empty pixels, e.g. surrounded by exactly one line of empty pixels along each of the four sides of the cut-out section.

Having less than 10 lines of empty pixels or exactly one row of empty pixels along the edges of the cut-out section ensures that the complete blob is accommodated therein and that the cut-out section is not larger than necessary.

In some aspects, the method comprises:
at the processing station:
processing the second images including generating at least an intensity radar image representing intensity of the radio wave reflections received by a radar antenna; and
processing the second images, including generating at least a moving target indicator (MTI) radar image; wherein the second images include phase information.

An advantage is that range information and movement information can be distinguished from each other. The second images include phase information associated with a Doppler shift.

In some aspects, the method comprises:
at the processing station:
generating intensity radar images based on processing the second radar images; and
generating phase-information radar images based on processing the second radar images.

An advantage is that intensity radar images and the phase-information radar images can be separately input to a processing step e.g. based on convolutional processing. In some examples, each second radar image may be processed into an intensity radar image and a phase-information radar image.

In some aspects, the method comprises:
at the processing station:
performing convolutional processing based on the intensity radar images and the phase-information radar images.

This is an advantage for deriving detailed information from the second radar video images. In some examples the convolutional processing includes use of a convolutional neural network and/or a convolutional filter.

The inclusion of phase information enables improving the ability of models or systems using the data sets to handle in-homogenous and/or very fast movements of the vessels or aircrafts being tracked.

In some aspects, each set of track data further includes one or more of:
a velocity value associated with the moving object observed based on processing the first radar images;
a course value, including an orientation, associated with the moving object observed based on processing the first radar images; and
metadata associated with the moving object observed based on processing the first radar images.

Whereas the velocity value and the course value may be included at the radar installation, the metadata are typically included at the processing station e.g. based on an identification system, such as the Automatic Identification System, AIS or a surveillance system, such as the Automatic Dependent Surveillance-Broadcast, ADS-B.

The orientation and velocity of the vessel or aircraft being tracked is useful information for optimising the training of such a vessel type identification system using data sets extracted using the present method.

In some aspects, for each set of track data, a radar video cut-out and a data set is created for both a normal radar video image and a moving target indicator (MTI) radar video image obtained by the same radar installation.

In some aspects, the method comprises:
at the data processing station,
receiving and storing the second radar video, including the second images, and the one or more sets of track data including the information associating the one or more sets of track data with corresponding cut-out sections.

An advantage is that the detailed radar reflection information is available e.g. for documentation of observed object's movement at a time later than when the moving object was observed by the radar installation.

In some aspects, the method comprises:
at the data processing station:
padding the second images, including the cut-out sections, to obtain second images with similar size.

An advantage is that the second images are prepared for processing e.g. including convolutional processing.

In some aspects, the method comprises:
at the data processing station,
acquiring label data obtained from a remote system; wherein the label data includes one or more identification values and/or metadata associated with an object at a position and time corresponding with the coordinate and at least one timestamp associated with the track of the moving object observed based on processing the first radar images.

An advantage is that the processing station, rather than the radar installation, is tasked with data retrieval operations, e.g. requiring fast data networks, and merging of radar data and e.g. metadata.

In some aspects, the method comprises:
at the data processing station:
   performing training of a machine learning model based on
   the label data; and
   the second radar video, including the second images, and
the one or more sets of track data including the information associating the one or more sets of track data with corresponding cut-out sections.

An advantage is that machine learning operations can be performed on the detailed radar information at a location remote from the radar installation.

The machine learning model may include a convolutional neural network or another type of machine learning model.

In some aspects, the method comprises:
at the data processing station:
   processing the second images including generating at least an intensity radar image representing intensity of the radio wave reflections received by a radar antenna; and
   processing the second images including generating at least a phase-information radar image;
wherein the machine learning model includes a convolutional neural network with at least a first input channel and a second input channel;
wherein the intensity radar image is input to the first input channel; and wherein the phase information radar image is input to the second input channel.

An advantage is that the inference ability of the convolutional neural network associated with the observed moving object can be improved.

In some aspects, the method comprises:
at the data processing station:
receiving metadata from a remote system including one or more of:
   an identification system, such as the Automatic Identification System, AIS; and
   a surveillance system, such as the Automatic Dependent Surveillance-Broadcast, ADS-B; and
generating label data based on the metadata.

An advantage is that label data can be generated based on available identification and/or surveillance data. This is useful for preparing data for training a machine learning component. This may be useful also for validation of the received metadata based on using the machine learning in a trained state.

There is also provided:
A radar installation comprising:
   a radar antenna configured to receive radio wave reflections and generate radar images;
   a radar processor including a data storage;
wherein the radar processor is configured to perform the method set out above.

There is also provided:
A data processing station including a processor configured to perform the method set out above in conjunction with the radar installation.

### BRIEF DESCRIPTION OF THE FIGURES

An exemplary embodiment of the invention is described in more detail in the following with reference to the figures, of which:
fig. 1 shows schematically an image of a radar video captured at a first point in time;
fig. 2 shows schematically another image of the same radar video captured at a second point in time, which is later than the first point in time;
fig. 3 shows schematically yet another image of the same radar video captured at a third point in time, which is later than the second point in time;
fig. 4 shows a block diagram of a radar installation and a data processing station;
fig. 5 shows a flowchart for a method at the radar installation; and
fig. 6 shows a flowchart for a method at the data processing station.

### DETAILED DESCRIPTION

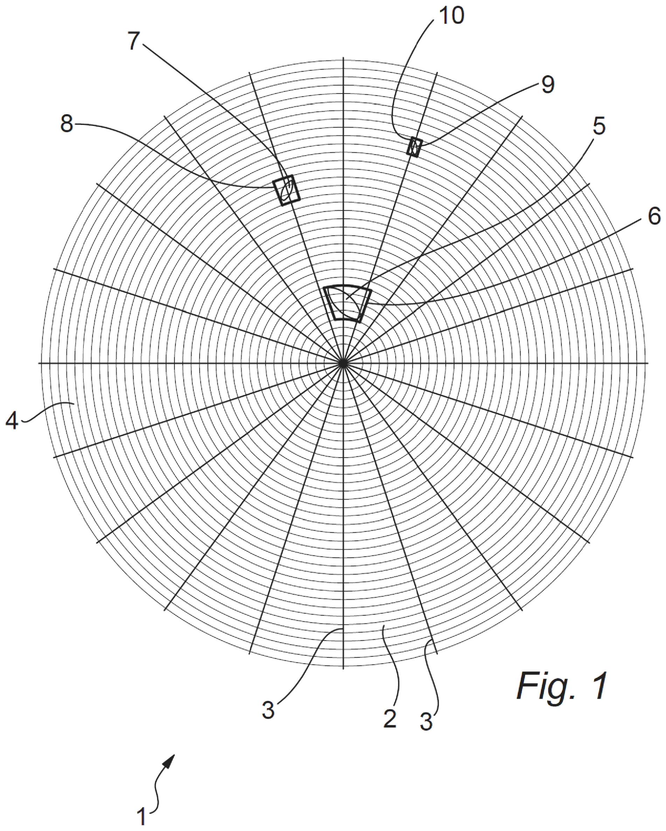

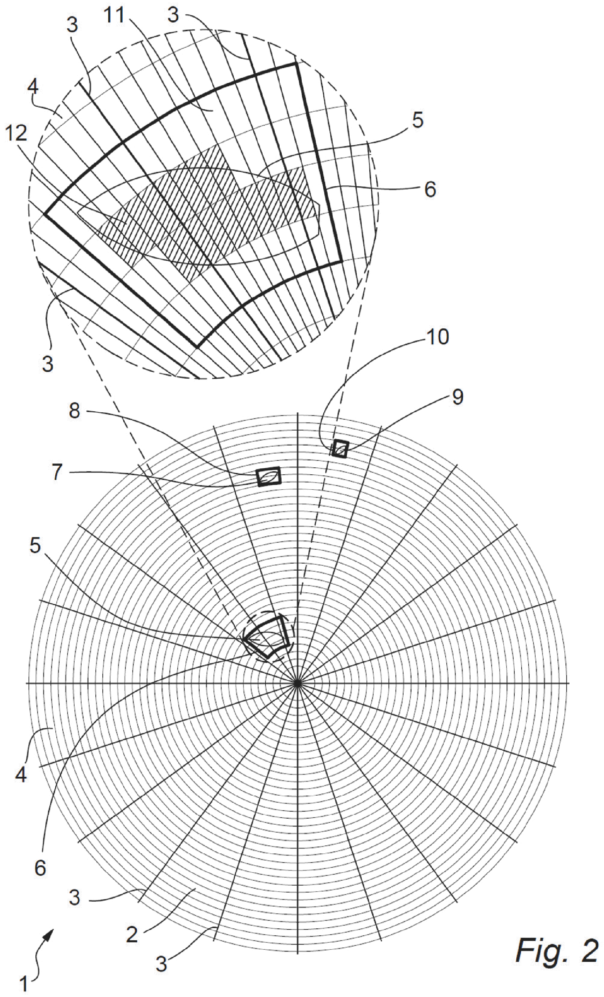

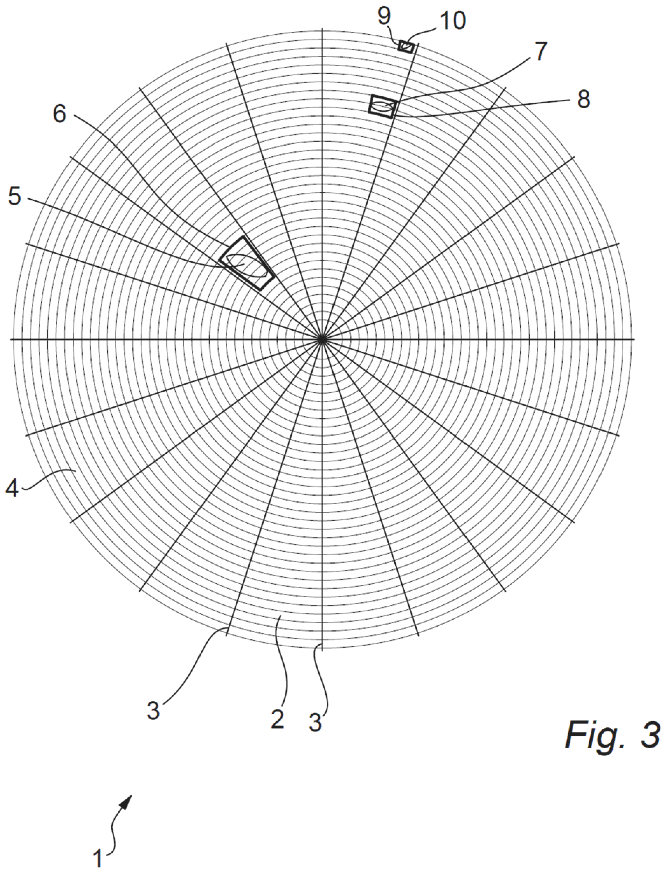

Figs. 1-3 illustrate schematically three images of a radar video 1 captured at three different points in time. Each of the three figures comprises blobs 5, 7, 9 corresponding to three vessels detected by the radar system. It is seen how the blobs 5, 7, 9 change positions and orientations between the first point in time illustrated in Fig. 1 and the second point in time illustrated in Fig. 2 and again between the second point in time and the third point in time illustrated in Fig. 3. In Fig. 3, the third vessel has partly left the monitoring area, which is covered by the radar installation and mapped in the radar video 1, so that only a smaller blob 9 representing half of the vessel is visible in the radar video 1 and the respective defined cut-out section 10 is correspondingly small.

For the sake of clarity, the three blobs 5, 7, 9 are illustrated as stylistic boat outlines. However, it should be clear that in practice, a blob 5, 7, 9 representing a vessel is constituted by a contiguous blob of non-empty pixels 12 surrounded by empty pixels 11 in the radar video 1 as it is indicated in the enlarged part of Fig. 2.

The three figures show how the radar video 1 is configured as a polar coordinate grid illustrating a map of the area, which is monitored by a continuously rotating radar installation positioned in the centre thereof.

The radar video 1 comprises a number of pixels 11, 12 arranged in concentric "range rings" 4 around the centre. The number of pixels 11, 12 being the same in each of these range rings 4 means that the size of the pixels 11, 12 grow with increasing distance from the centre so that the pixels 11, 12 in the outermost range ring 4 is quite a lot larger than the pixels 11, 12 in the innermost range ring 4. One "column" of neighbouring pixels 11, 12 (one from each range ring 4) forming a straight line in a radial direction from the centre to the outer edge of the radar video 1 is known as a sweep.

The figures also show how the radar video 1 is divided into a number of substantially triangular sectors 2, each comprising a number of sweeps. The borders 3 between the sectors 2 are not visible in the radar video 1 but they are indicated in the figures for the sake of understanding. Normally, the radar video 1 is updated 10-60 times per minute one sector 2 at the time, typically in a clockwise direction, so that every updated sector 2 overwrites the previous sector 2 at that position in the radar video 1.

Each sweep and sector 2 is marked with an individual time stamp so that, if needed, even though the radar video 1 image is a frozen image of the radar video 1 corresponding to the latest full update of the radar video 1, the temporal origin of the individual parts of the radar video 1 image can be determined.

The update of the track data is normally delayed compared to the update of the radar video 1 data. Typically, this delay can be in the order of one second. This means that, in order to be able to identify the updated position of the vessel and to define the cutout section 6, 8, 10 in the radar video 1 image corresponding to the time, at which the update was made (sub-steps i and ii as defined above), it may be necessary to buffer two or more full updates of the radar video 1, because the relevant sectors 2 may be overwritten, before the track data is ready.

Sometimes and under some circumstances, the radar installation may redo the tracking algorithms using alternative hypotheses. In such cases, the tracking data may be adjusted when the radar video 1 image corresponding to the time of the acquisition of the data is no longer in the buffered data and it is not possible to update the radar video 1 cut-out accordingly. In such cases, the radar video 1 cut-out corresponding to the original non-adjusted update of the track data may be "paired" with the adjusted update of the track data in the created dataset.

The illustrated radar video 1 is simplified for the sake of clarity, comprising only 35 range rings 4 and 20 sectors 2, each of which sectors 2 comprises only 7 sweeps, cf. the enlarged part of Fig. 2. In practice, the radar video 1 can, for instance, comprise 2,048, 4,096 or 8,192 range rings 4 and 2,048 or 4,096 sweeps distributed in 64 or 128 sectors 2, each comprising 32 sweeps.

Whenever the radar installation detects an obstacle of any kind at a given position, the corresponding pixel(s) 12 of the radar video is/are marked as being non-empty, for instance by making the pixel white on an otherwise black background of empty pixels 11.

Depending on the size of the vessel, on its distance from the radar installation and its orientation relatively to the radar installation and on the resolution of the radar video 1, the blob 5, 7, 9 representing the vessel may occupy any number from only a few to quite a lot of pixels 12. For instance, a blob 5, 7, 9 will occupy more pixels 11, 12 if the vessel is closer to the centre than if it is further away, due to the different sizes of the pixels 11, 12 depending on the distance from the centre. Also, due to the elongated shape of a vessel, the corresponding blob 5, 7, 9 will be broader and occupy more pixels 11, 12, if the vessel is passing with its side against the radar installation than if it is on its way towards or away from the radar installation.

This is reflected in the changes in the shapes and sizes from one figure to the other of the defined cut-out sections 6, 8, 10 for each blob 5, 7, 9, which are indicated by bold lines in the figures. According to a preferred embodiment of the invention, these cut-out sections 6, 8, 10 are dynamically adjusted or trimmed so that, at any time, they accommodate the complete blob 5, 7, 9 representing the respective vessel being tracked without being any larger than necessary so that the amount of data to be stored is kept as low as possible. As it is clear from the figures, a cut-out section 6, 8, 10 may very well overlap a number of neighbouring sectors 2.

The enlarged part of Fig. 2, indicates how the blob 5 representing the first vessel is, in practice, constituted by a number of non-empty pixels 12 surrounded by empty pixels 11 rather than by the stylistic boat outline used in Figs. 1-3. It also shows how, according to some embodiments of the invention, the defined cutout section 6 is "rectangular" in the sense that it comprises four pixels 11, 12 in the radial direction and 14 pixels in the tangential direction. Furthermore, this enlarged part of Fig. 2 illustrates how, according to some embodiments of the invention, the dimensions of the defined cutout section 6 are adapted so that the designated blob is surrounded by exactly one line of empty pixels 11 along each of the four sides of the cut-out section 6.

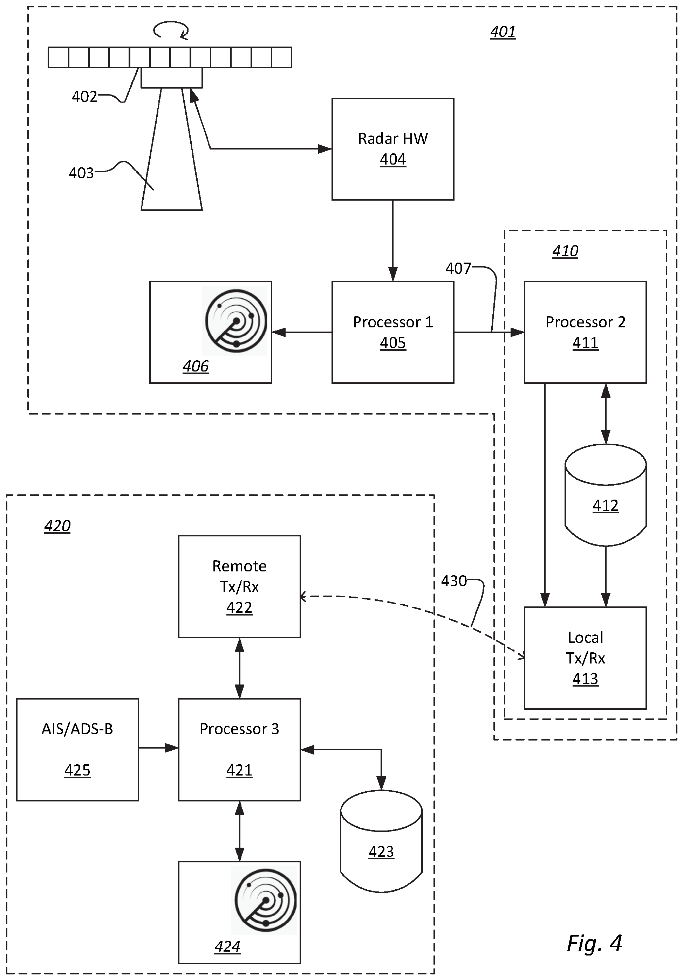

Fig. 4 shows a block diagram of a radar installation and a data processing station. The radar installation 401 includes a radar antenna 402, e.g. a rotating radar antenna, mounted on a support structure 403, e.g. a mast, a roof or a platform. The radar antenna 403 is operatively connected with a radar hardware 404 controlling the antenna including e.g. control of rotation of the antenna, emitting and receiving radar signals. A processor 405, including computing hardware, is connected to the radar hardware to generate (first) radar video images based on the radar signals received via the radar antenna. Optionally, the radar installation includes a user interface, including a display, displaying the radar video images. The radar installation 401 may include a conventional marine radar. The (first) radar video images typically include large amounts of image data. The processor 405 may be configured to generate one or more sets of track data; wherein each set of track data includes at least one coordinate and at least one timestamp associated with a track of a moving object observed based on processing the first radar images. The one or more sets of track data may be obtained based on the radar video images.

The radar installation 401 is connected to a radar video image processor 410 via a cabled network 407. The radar video image processor 410 is configured to perform reduction of radar image videos as described herein. The radar video image processor 410 may receive the first radar video images and generate second radar video images, wherein the second radar video images are reduced in size compared to the first radar video images. The radar video image processor 410 may also receive the one or more sets of track data. In some embodiments, the radar video image processor 410 is included with the processor 405. The radar video image processor 410 also receives the one or more sets of track data. The radar video image processor 410 has access to a data storage 412, e.g. a database. The database may store one or both of the first radar video images and the second radar video images. The database may also store the one or more sets of track data. The radar video image processor 410 includes a transmitter/receiver 413 for establishing a communication line or network 430 with a data processing station 420. In some examples, the communication line or network includes one or more physical connections and/or one or more wireless connections. In some examples the transmitter/receiver 413 operates in accordance with a wireless data network e.g. including a cellular data network e.g. including 4G or 5G radio technology.

The data processing station 420 includes a transmitter/receiver 422 for communication with the transmitter/receiver 413 at the radar installation. The transmitter/receiver 422 receives the second radar video images and the sets of track data from the radar installation. A processor 421 processes the received second radar video images and the sets of track data e.g. including storing data in a data storage 423. The processor 421 is coupled to receive one or both of AIS and ADS-B data via a communication network e.g. the Internet or via an antenna (not shown). Optionally, the data processing station includes a user interface 424 including a display e.g. for monitoring radar video images.

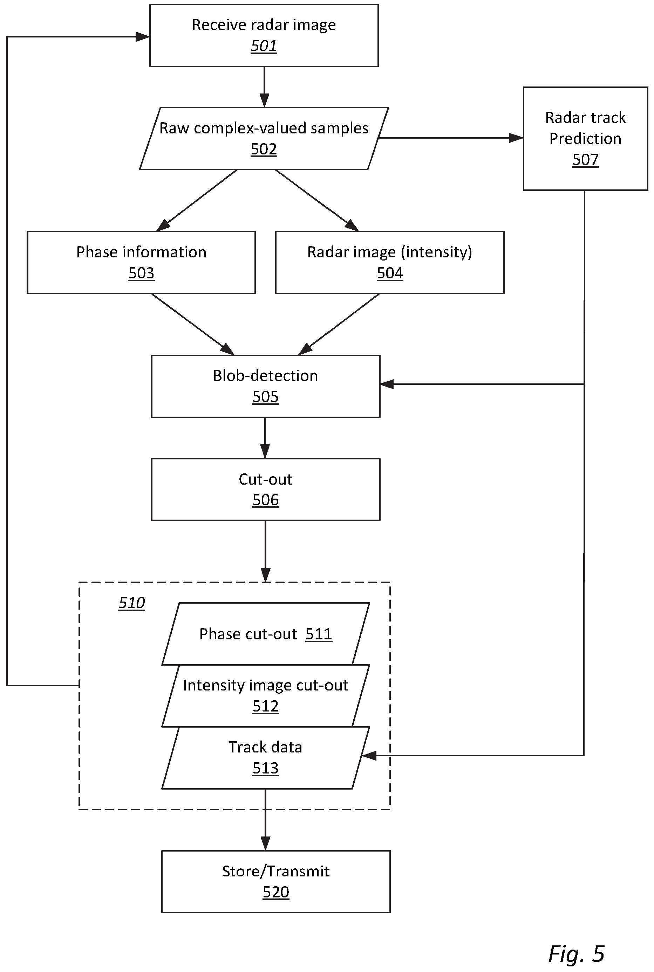

Operations performed at the radar installation is described in more detail with respect to fig. 5.

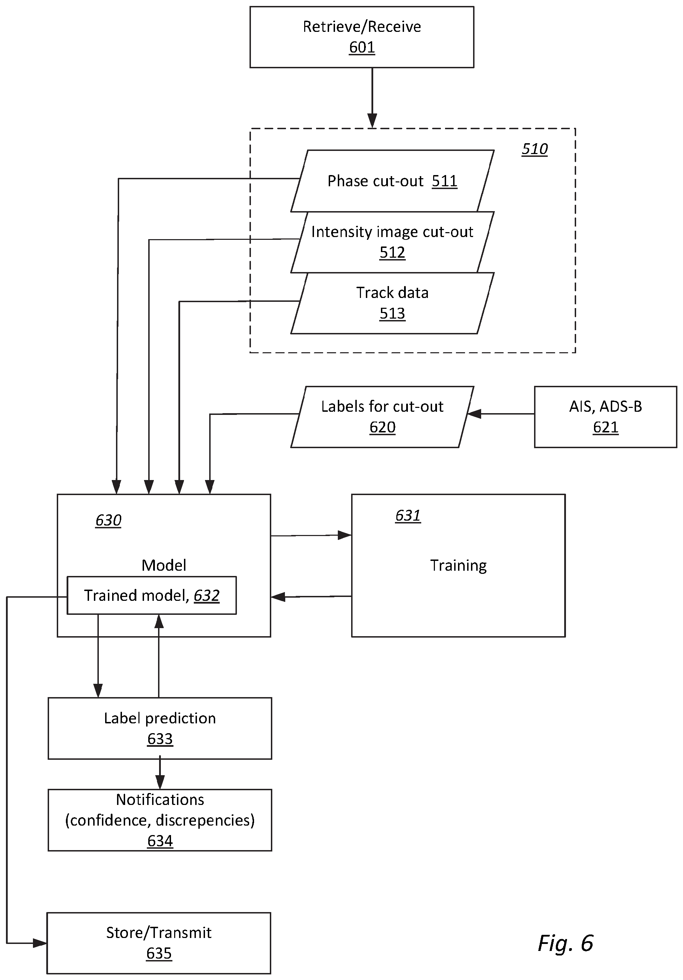

Operations performed at the data processing station is described in more detail with respect to fig. 6.

Herein, the term 'processor' or 'processing station' may include one or more electronic processors and/or one or more computers.

Fig. 5 shows a flowchart for a method at the radar installation. The method is performed for at least some, e.g. all images, in a radar video. At step 501 a radar image from the first radar video is received from the radar installation 401 or from the storage 423. As illustrated by box 502, the radar image includes complex-valued samples or pixels including intensity (magnitude) and phase information as illustrated by boxes 503 and 504.

At step 507 radar track prediction is performed based on at least some e.g. all images, in the radar video. Radar track prediction is typically a function available in a conventional radar system. Based on the radar track prediction, sets of track data including a coordinate, a time-stamp, and an identifier for an object is generated. The track data may include an estimated speed and course. Step 507 determines, based on the first radar images, one or more sets of track data; wherein each set of track data includes at least one coordinate and at least one timestamp associated with a track of a moving object observed based on processing the first radar images.

Based on the track data, including the coordinate and time-stamp, step 505 performs blob-detection including designating a contiguous blob including non-empty radar image pixels from the first radar video images at and about the at least one coordinate in the set of track data.

Based on the contiguous blob, step 506 determines a cut-out section; wherein the cut-out section includes the contiguous blob and radar image pixels surrounding the contiguous blob.

As illustrated by box 510 the contiguous blob includes phase information 511 in the cut-out section and intensity (magnitude) information 512. The contiguous blob is associated with track data 513 provided in step 507. In some examples the track data 513 are selected from track data provided in step 507. This is useful, when track data are not associated with a cut-out section e.g. by having coordinates that do not coincide.

The method resumes to step 501 to perform the above operations for a subsequent radar image in the radar video.

Box 510 illustrates that a second radar video is generated based on the cut-out sections and the associated sets of track data. As noted, the track data may include coordinates, course, speed and an identifier.

Recurrently, the second radar video and the associated sets of track data are transmitted and/or stored in step 520.

Fig. 6 shows a flowchart for a method at the data processing station. At step 601 the data processing station 420 receives the second radar video and the associated sets of track data. Thus, the data processing station receives a reduced-size radar video, however including intensity information and phase information.

At step 621 metadata are received and at step 620 labels (metadata) for training a machine learning model are generated. At step 621 metadata can originate from AIS and/or ADS-B and/or manual annotations from human operators and/or algorithmic sources, such as Al. The labels are filtered to include only metadata corresponding with the cut-out sections in the second radar video.

Using a training step 631, a machine learning model 630 is trained to generate a trained machine learning model 632. The machine learning model may be a conventional machine learning model trained using conventional training algorithms. In some examples, the machine learning model includes a convolutional neural network with at least a first input channel and a second input channel; wherein an intensity radar image is input to the first input channel; and wherein the phase information is input to the second input channel. In some examples phase information is included in the moving target indicator (MTI) radar image. In some examples the cut-out sections are padded to obtain equally sized images.

In aspects, wherein a trained machine learning component is generated, step 633 is enabled to receive or retrieve further, subsequent, second radar images from the radar installation and generate label prediction based on the further, subsequent, second radar images. It is thereby possible to estimate labels (including metadata) at times when such data are not available or not validly available from another source. In some examples such a source is an AIS or ADS-B provider.

At step 634, notifications or reports may be generated based on label predictions e.g. to indicate confidence levels associated with the label predictions and/or to indicate discrepancies between label data and predicted labels.

At step 635, the trained model 632 may be stored or transmitted to a remote facility.

Generally, the automatic identification system (AIS) is an automatic tracking system that uses transceivers on ships and is used by vessel traffic services (VTS). When satellites are used to receive AIS signatures, the term Satellite-AIS (S-AIS) is used. AIS information supplements marine radar, which continues to be the primary method of collision avoidance for water transport. Information provided by AIS equipment, such as unique identification, position, course, and speed, can be displayed on a screen or an electronic chart display and information system (ECDIS). AIS is intended to assist a vessel's watch-standing officers and allow maritime authorities to track and monitor vessel movements. AIS integrates a standardized VHF transceiver with a positioning system such as a Global Positioning System receiver, with other electronic navigation sensors, such as a gyrocompass or rate of turn indicator. Vessels fitted with AIS transceivers can be tracked by AIS base stations located along coastlines or, when out of range of terrestrial networks, through a growing number of satellites that are fitted with special AIS receivers which are capable of deconflicting a large number of signatures.

Generally, the automatic Dependent Surveillance-Broadcast (ADS-B) is an aviation surveillance technology and form of Electronic Conspicuity in which an aircraft (or other airborne vehicles such as drones approved to fit "ADS-B Out") determines its position via satellite navigation or other sensors and periodically broadcasts its position and other related data, enabling it to be tracked. The information can be received by air traffic control ground-based or satellite-based receivers as a replacement for or alternative to secondary surveillance radar (SSR).

### ITEMS:

1. A method at a radar installation with a radar antenna, comprising:
   acquiring first radar video including first radar images (1), each including radar image pixels, generated at the radar installation based on radio wave reflections received by the radar antenna;
   determining, based on the first radar images, one or more sets of track data; wherein each set of track data includes at least one coordinate and at least one timestamp associated with a track of a moving object observed based on processing the first radar images;
   generating a second radar video, including one or more second radar images, including for each set of track data:
      i. designating a contiguous blob (5, 7, 9) including non-empty radar image pixels from the first radar video images at and about the at least one coordinate in the set of track data;
      ii. based on the contiguous blob, determining a cut-out section (6, 8, 10); wherein the cut-out section includes the contiguous blob (5, 7, 9) and radar image pixels surrounding the contiguous blob; and
      iii. generating a second radar image based on the cut-out section;
   associating the one or more sets of track data with corresponding cut-out sections;
   sending at least the second radar video, including the second radar images, and the one or more sets of track data including information associating the one or more sets of track data with corresponding cut-out sections to a data processing station;
   wherein the first radar images and the second radar images each include radar image pixels including magnitude information and phase information based on the radio wave reflections received by the radar antenna.
2. The method according to the preceding item, wherein each cut-out section is configured with a size that is dynamically determined based on the contiguous blob (5, 7, 9).
3. The method according to any preceding item, wherein the first radar video images include images of a uniform size; and wherein the second radar video images include images of a non-uniform size.
4. The method according to any preceding item, wherein the cut-out section (5, 7, 9) is "rectangular" in the sense that it comprises a fixed number of pixels (11, 12) in the radial direction and a fixed number of pixels (11, 12) in the tangential direction of the radar video (1).
5. The method according to any preceding item, wherein for each set of track data, dimensions of the cut-out section (6, 8, 10) are adapted so that the corresponding designated blob (5, 7, 9) is surrounded by less than 10 lines of empty pixels, e.g. surrounded by exactly one line of empty pixels (11) along each of the four sides of the cut-out section (6, 8, 10).
6. The method according to any preceding item, comprising:
   at the processing station:
   processing the second images including generating at least an intensity radar image representing intensity of the radio wave reflections received by a radar antenna; and
   processing the second images, including generating at least a moving target indicator (MTI) radar image; wherein the second images include phase information.
7. The method according to any preceding item, comprising:
   at the processing station:
   generating intensity radar images based on processing the second radar images; and
   generating phase-information radar images based on processing the second radar images.
8. The method according to the preceding item, comprising:
   at the processing station:
   performing convolutional processing based on the intensity radar images and the phase-information radar images.
9. The method according to any preceding item, wherein each set of track data further includes one or more of:
   a velocity value associated with the moving object observed based on processing the first radar images;
   a course value, including an orientation, associated with the moving object observed based on processing the first radar images; and
   metadata associated with the moving object observed based on processing the first radar images.
10. The method according to any preceding item, wherein, for each set of track data, a radar video (1) cut-out and a data set is created for both a normal radar video (1) image and a moving target indicator (MTI) radar video (1) image obtained by the same radar installation.
11. The method according to any preceding item, comprising:
   at the data processing station,
   receiving and storing the second radar video, including the second images, and the one or more sets of track data including the information associating the one or more sets of track data with corresponding cut-out sections.
12. The method according to the preceding item, comprising:
   at the data processing station:
   13. padding the second images, including the cut-out sections, to obtain second images with similar size. The method according to any preceding item, comprising:
      at the data processing station,
      acquiring label data obtained from a remote system; wherein the label data includes one or more identification values and/or metadata associated with an object at a position and time corresponding with the coordinate and at least one timestamp associated with the track of the moving object observed based on processing the first radar images.
   14. The method according to any preceding item, comprising:
      at the data processing station:
      performing training of a machine learning model based on
      the label data; and
      the second radar video, including the second images, and the one or more sets of track data including the information associating the one or more sets of track data with corresponding cut-out sections.
   15. The method according to the preceding item, comprising:
      at the data processing station:
         processing the second images including generating at least an intensity radar image representing intensity of the radio wave reflections received by a radar antenna; and
         processing the second images including generating at least a phase-information radar image;
      wherein the machine learning model includes a convolutional neural network with at least a first input channel and a second input channel;
      wherein the intensity radar image is input to the first input channel; and
      wherein the phase information radar image is input to the second input channel.
   16. The method according to any preceding item, comprising:
      at the data processing station:
      receiving metadata from a remote system including one or more of:
         an identification system, such as the Automatic Identification System, AIS; and
         a surveillance system, such as the Automatic Dependent Surveillance-Broadcast, ADS-B; and
      generating label data based on the metadata.
   17. A radar installation comprising:
      a radar antenna configured to receive radio wave reflections and generate radar images;
      a radar processor including a data storage;
      wherein the radar processor is configured to perform the method according to any of item 1-16.
   18. A data processing station comprising:
      a processor configured to perform the method according to any of item 1-16 in conjunction with the radar installation.

## Claims

1. A method for extracting radar video (1) data suitable for identification of vessels and/or aircrafts, which method comprises the steps of:
acquiring and repeatedly updating a radar video (1) in the form of a polar coordinate grid displaying data collected by a radar installation, such as a rotary marine radar monitoring an area of sea,
acquiring and repeatedly updating one or more sets of track data, which are typically obtained by analysing the data collected by the data installation, each of which sets of track data represents the track of a vessel or aircraft, and each of which updated set of track data comprises at least an updated position of the vessel or aircraft being tracked and the time, at which this update was made,
for each update of an acquired set of track data
i. identifying in a radar video (1) image corresponding to the time, at which the update was made, the coordinates corresponding to the updated position of the vessel or aircraft being tracked,
ii. designating a contiguous blob (5, 7, 9) of non-empty radar video pixels (12) surrounding and comprising the identified coordinates,
iii. defining a cut-out section (6, 8, 10) of the radar video (1) image comprising the blob (5, 7, 9), and
iv. creating a radar video cut-out in the form of an image, the pixels of which correspond to the pixels in the defined cut-out section (11, 12) of the radar video (1) image;
creating and storing a data set for each set of track data, which data set comprises a series of updates of the set of track data and the corresponding radar video (1) cut-outs; and
sending one or more of the created and stored data sets to a remote data processing centre for further processing and/or for being used for automatic vessel or aircraft type identification using an automatic vessel or aircraft type identification system, such as an Artificial Intelligence-based vessel or aircraft type identification system, or for training such an automatic vessel or aircraft type identification system;
wherein, for each update of an acquired set of track data, a radar video (1) cut-out and a data set is created for both a normal radar video (1) image and an moving target indicator (MTI) radar video (1) image obtained by the same radar installation.

2. The method according to claim 1, wherein each updated set of track data further comprises an updated velocity of the vessel or aircraft being tracked, an updated orientation of the vessel or aircraft being tracked and/or information about the type of the vessel or aircraft being tracked.

3. The method according to any of the preceding claims, wherein the dimensions of the defined cut-out sections (6, 8, 10) relating to a given set of track data are dynamically adjusted so that, for each update of the set of track data, the size of the defined cutout section (6, 8, 10) is adapted to accommodate the complete designated blob (5, 7, 9) and to be only slightly larger than the designated blob (5, 7, 9).

4. The method according to any of the preceding claims, wherein the defined cut-out section (5, 7, 9) is "rectangular" in the sense that it comprises a fixed number of pixels (11, 12) in the radial direction and a fixed number of pixels (11, 12) in the tangential direction of the radar video (1).

5. The method according to claim 4, wherein, for each update of the set of track data, the dimensions of the defined cut-out section (6, 8, 10) are adapted so that the respective designated blob (5, 7, 9) is surrounded by exactly one line of empty pixels (11) along each of the four sides of the cutout section (6, 8, 10).

6. The method according to any of the preceding claims, wherein the radar video (1) cut-outs are created from either a normal radar video (1) image or a moving target indicator (MTI) radar video (1) image.

7. The use of a data set extracted using the method according to any of the preceding claims for automatic vessel or aircraft type identification using an automatic vessel or aircraft type identification system, such as an Artificial Intelligence-based vessel or aircraft type identification system.

8. The use of a data set extracted using the method according to any of claims 1-7 for training an automatic vessel or aircraft type identification system, such as an Artificial Intelligence-based vessel or aircraft type identification system, which data set further comprises information about the type of the vessel or aircraft to the tracking of which the data set relates.

9. The use of a data set extracted using the method according to any one of claims 1-8 for automatic vessel or aircraft type identification using an automatic vessel or aircraft type identification system, such as an Artificial Intelligence-based vessel or aircraft type identification system.

10. The use of a data set extracted using the method according to any one of claims 1-8 for training an automatic vessel or aircraft type identification system, such as an Artificial Intelligence-based vessel or aircraft type identification system, which data set further comprises information about the type of the vessel or aircraft to the tracking of which the data set relates.
